# EUROPÄISCHE PATENTANMELDUNG

(11) **EP 2 645 308 A2**
(43) Veröffentlichungstag der Anmeldung: **02.10.2013**
(21) Anmeldenummer: 13075027.6
(22) Anmeldetag: 26.03.2013
(51) Int. Cl.: G06K 19/077, B26F 1/00, B42F 11/00, B42F 13/00

(54) **Elektronische Speichereinrichtung mit USB-Anschluss**

(30) Priorität: 30.03.2012 DE 102012006940
(71) Anmelder: Kaiser, Hans-Christoph, 42929 Wermelskirchen (DE)
(72) Erfinder: Kaiser, Hans-Christoph, 42929 Wermelskirchen (DE)
(74) Vertreter: Kietzmann, Manfred

(57) **Zusammenfassung**

Elektronische Speichereinrichtung mit einem USB-Stick (2), der in, auf oder an einem flächigen Körper (1) angeordnet ist, wobei eine Relativbewegung zwischen dem USB-Stick (2) und dem flächigen Körper (1) den Anschlussstecker (3) des USB-Sticks (2) in eine Position bringt, die in eine Anschlussdose steckbar ist, und der flächige Körper (1) Lochungen (4) aufweist, die so beabstandet sind, dass der flächige Körper (1) mit in Ordnern befindlichen Heftzungen (5) oder Heftbügeln verbindbar ist und/oder der flächige Körper (1) selbst über beabstandete Heftzungen (5) verfügt, so dass auf oder unter dem flächigen Körper (1) gelochte Dokumente heftbar sind.

## Beschreibung

Die Erfindung betrifft eine Speichereinrichtung mit einem USB-Anschluss, die insbesondere für Archivierungszwecke nutzbar ist.

Es ist bekannt, USB-Speicher unmittelbar mit Papierdokumenten zu verbinden, um dem Nutzer die Möglichkeit zu geben, Papierdokumente auch in elektronischer Form zu nutzen.

In der WO 2010/136 025 A1 wird ein flaches elektronisches Speichermedium in Form eines USB-Sticks beschrieben, der über eine Fläche aus einem elastischen Material verfügt, aus der eine Teilfläche herausdrückbar ist, so dass das Speichermedium auf ein anderes Trägermaterial aufsteckbar oder an diesem anklemmbar ist.

Aus der AT 008 381 U1 ist es bekannt, einen Ordnerrücken mit einer Halterung für einen USB-Stick zu versehen. Der Ordnerrücken weist dazu Führungsschienen für die Aufnahme des USB-Sticks auf.

Mit der DE 20 2009 017 457 U1 wird ein USB-Stick in einer Kartenkonstruktion vorgeschlagen. Die Karte aus Kunststoff-Spritzguss weist am Rand eine Einsteckausnehmung für einen USB-Stick auf.

Ferner ist es aus der EP 1 755 072 A2 bekannt, eine Kreditkarte mit einem USB-Anschlussstecker auszurüsten. Die Karte ist je nach Anordnung des USB-Sticks ein- oder beidseitig des USB-Sticks oder auch steckerseitig geschlitzt ausgebildet, so dass Kartenteile vom USB-Stick wegbiegbar sind, dessen Anschlussstecker dann freiliegt und mit einer Anschlussdose verbindbar ist.
Weiterhin werden abgebogene Kartenteile genutzt, um die Höhendifferenz des Anschlusssteckers zur Anschlussdose zum Zwecke der Kontaktierung in der Anschlussdose auszugleichen.

Der Nachteil dieser Lösung besteht darin, dass die abgebogenen Kartenteile eine Kraft auf die eingesteckten Anschlussstecker ausüben, was zum Lösen der Steckerverbindung führen kann.

In der DE 20 2008 011 803 U1 wird ein elektronischer Datenträger in Kartenform beschrieben, der über einen aus der Karte herausklappbaren Kontaktanschluss mit Kontaktelementen verfügt, so dass im Kartenspeicher vorhandene Daten ausgelesen werden können oder Daten zur Speicherung übermittelbar sind. Nachteilig ist die hohe Bruchgefahr für die elektrischen Kontakte an der Knickstelle.

Ähnlich ist die Anordnung des Datenträgers gemäß 10 2007 039 821 A1. Hier ist für die Verbindung zwischen dem Kontaktelement des Datenträgers und dem Übertragungsteil ein Scharnier angeordnet, wobei das Übertragungselement vollständig vom Datenträger eingeschlossen und in einem Teilbereich von diesem durch einen Schlitz getrennt ist.

Letztlich soll noch auf einen Halter in Form eines Schreibgerätes verwiesen werden, an dem ein USB-Stick verschiebbar oder drehbar oder angeklemmt angeordnet ist (DE 20 2008 017 711 U1).

Aufgabe der Erfindung ist es, eine elektronische Speicheranordnung mit einem USB-Anschluss vorzuschlagen, die insbesondere für Archivierungszwecke durch Heftung nutzbar ist. Gelöst wird diese Aufgabe mit den Merkmalen des Anspruches 1, vorteilhafte Ausgestaltungen sind Gegenstand der Unteransprüche.

Erfindungsgemäß wird eine elektronische Speichereinrichtung mit einem USB-Stick vorgeschlagen, bei der der USB-Stick in einem flächigen Körper oder auf oder an einem flächigen Körper angeordnet ist, wobei durch eine Relativbewegung zwischen dem USB-Stick und dem flächigen Körper der Anschlussstecker des USB-Sticks in eine in eine Anschlussdose einsteckbare Position bringbar ist und der flächige Körper Lochungen aufweist, die so beabstandet sind, dass der flächige Körper mit mindestens zwei Lochungen mit in Ordnern befindlichen Heftzungen der Heftbügeln verbindbar ist und/oder der flächige Körper selbst über beabstandete Heftzungen verfügt, so dass auf oder unter dem flächigen Körper gelochte Dokumente heftbar sind. Dabei kann der flächige Körper sowohl starr als auch elastisch ausgebildet sein.

Die Speichereinrichtung lässt sich so zusammen mit in Ordnern oder Akten abgehefteten Dokumenten ebenfalls abheften und steht zur elektronischen Verarbeitung oder auch für eine Überprüfung der Vollständigkeit der Dokumente zur Verfügung.

Bei einer anderen Ausführung übernimmt der flächige Körper selbst die Funktion des Heftens von Dokumenten, indem er mit Heftzungen versehen ist.

Darüber hinaus ist auch eine Kombination der beiden Varianten vorgesehen. Ebenso ist es möglich, dass die Lochungen zum Anordnen der Heftzungen am flächigen Körper genutzt werden.

In einer vorteilhaften Ausführung kann der flächige Körper mindestens eine Vertiefung aufweisen zur Aufnahme eines Verschlusssiegels oder einer Plombe, die Heftzungen überdecken.
So lässt sich eine unbefugte Benutzung des USB-Sticks auf einfache Weise feststellen bzw. lassen sich Dokumente und elektronische Speichereinrichtung kontrollsicher miteinander verbinden.

In weiterer Ausgestaltung der elektronischen Speichereinrichtung ist vorgesehen, dass der USB-Stick in einem Rand- oder Eckbereich des flächigen Körpers angeordnet ist und der flächige Körper Schlitze aufweist, so dass den Anschlussstecker des USB-Sticks begrenzende Flächenabschnitte wegbiegbar oder umklappbar sind und der Anschlussstecker zur Herstellung einer Steckerverbindung freiliegt, wobei die wegbiegbaren oder umklappbaren Flächenabschnitte über ein Befestigungsmittel verfügen,

mit dem sie im weggebogenen oder umgeklappten Zustand mit dem verbliebenen flächigen Körper lösbar verbindbar sind. Damit wird auch die im Stand der Technik beschrieben Geldkartenlösung weiter verbessert.

Als Befestigungsmittel können Druckknöpfe oder Klettverschlüsse vorgesehen sein, die mit einem auf dem flächigen Körper angeordneten passfähigen Befestigungsmittel verbindbar sind.

Weiterhin ist es vorteilhaft, wenn das Wegbiegen oder Umklappen von Flächenabschnitten im Bereich von Biegekanten erfolgt, die querschnittgemindert in den flächigen Körper eingebracht oder scharnierartig ausgebildet sind.

Bei einer alternativen elektronischen Speichereinrichtung ist vorgesehen, dass der USB-Stick über ein Dreh- und/oder Kippgelenk mit dem flächigen Körper verbunden ist, so dass er über den Randbereich des flächigen Körpers mit dem Anschlussstecker herausschwenkbar ist oder der USB-Stick in eine Winkelposition gegenüber der Ebene des flächigen Köpers aufrichtbar ist oder der USB-Stick aus dem flächigen Körper herausklappbar ist.

Dabei hat es sich bewährt, wenn der flächige Körper eine wannenförmige Prägung oder Vertiefung aufweist, die den nichtherausgeschwenkten oder nichtaufgerichteten oder nichtherausgeklappten USB-Stick aufnimmt. Aufnehmen bedeutet dabei auch, dass nur eine Teilhöhe das USB-Sticks in der wannenförmigen Prägung oder Vertiefung aufgenommen wird.

Bei einer anderen Ausführung weist der flächige Körper einen seitlich offenen Hohlraum auf, der den nichtherausgeschwenkten USB-Stick aufnimmt.

Eine weitere alternative Ausführungsform der elektronischen Speichereinrichtung sieht vor, dass der flächige Körper im Randbereich eine Aussparung aufweist oder eine wannenförmige, einseitige offene Prägung oder Vertiefung, wobei gegenüberliegende Seiten der Aussparung oder der wannenförmigen Prägung oder Vertiefung als Führung für einen gegenüber dem flächigen Körper verschiebbaren USB-Stick ausgebildet sind.

Der USB-Stick lässt sich so mindestens soweit aus der Ebene des flächigen Körpers herausschieben, dass der Anschlussstecker in eine Anschlussdose einsteckbar ist.

Dabei können auch Teile der wannenförmigen, einseitig offenen Prägung oder Vertiefung oder Aussparung tunnelartig ausgebildet sein.

Von Vorteil ist es weiterhin, wenn der eingeschobene, eingedrehte, eingeklappte oder eingekippte USB-Stick in dieser Position zusätzlich durch eine Raste fixiert ist.

Als Speichervarianten sind bevorzugt vorgesehen: unverschlüsselt, software- und/oder hardwareverschlüsselt und einmalbeschreibbar.

Die Erfindung soll anhand der Zeichnungen erläutert werden. Es zeigen:
- Fig. 1: eine Speichereinrichtung mit Knickkante,
- Fig. 2: einen herausschwenkbaren USB-Stick,
- Fig. 3: einen herausschiebbaren USB-Stick
- Fig. 4: einen anderen herausschiebbaren USB-Stick und
- Fig. 5: einen herausklappbaren USB-Stick.

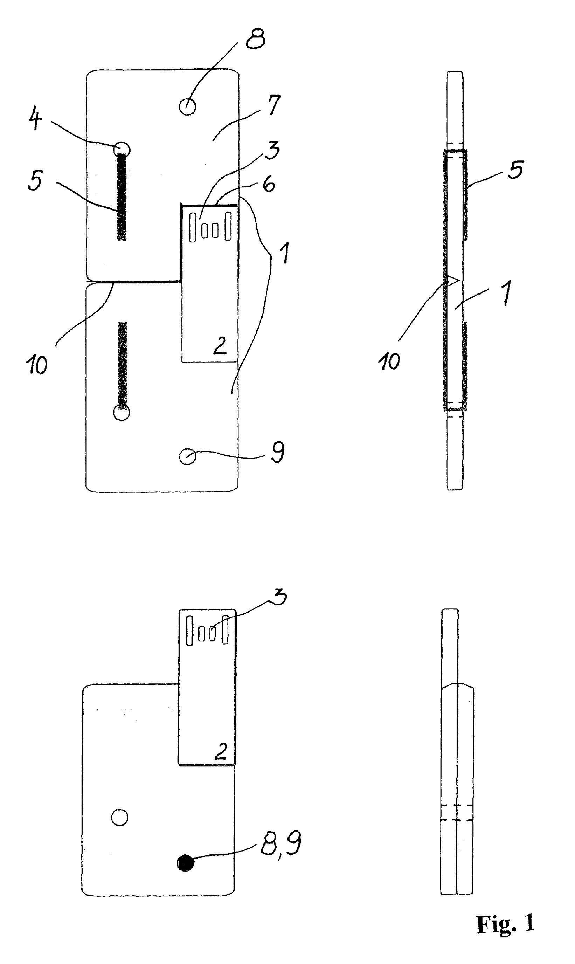

**Fig. 1** zeigt eine elektronische Speichereinrichtung mit einem USB-Stick 2, der in einem flächigen Körper 1 angeordnet ist, wobei durch eine Relativbewegung zwischen dem USB-Stick 2 und dem flächigen Körper 1 der Anschlussstecker 3 des USB-Sticks 2 in eine in eine Anschlussdose einsteckbare Position bringbar ist und der flächige Körper 1 im Randbereich Lochungen 4 aufweist, die so beabstandet sind, dass der flächige Körper 1 mit mindestens zwei Lochungen 4 mit in Ordnern befindlichen Heftzungen oder Heftbügeln verbindbar ist oder die, wie dargestellt, zur Anordnung von Heftzungen 5 genutzt werden.

Der USB-Stick 2 ist in dem dem gelochten Rand gegenüberliegenden Randbereich des flächigen Körpers 1 angeordnet. Der flächige Körper 1 weist hier im Bereich des Anschlusssteckers Schlitze 6 auf, so dass der den Anschlussstecker 3 des USB-Sticks 2 begrenzende Flächenabschnitt 7 wegbiegbar oder umklappbar ist und der Anschlussstecker 3 zur Herstellung einer Steckerverbindung freiliegt. Diese Position zeigt die untere Darstellung.

Der wegbiegbare bzw. umklappbare Flächenabschnitt 7 verfügt über ein Befestigungsmittel 8, hier ein Druckknopfteil, mit dem er im weggebogenen Zustand mit dem verbliebenen flächigen Körper 1 mittels des hier vorhandenen anderen Befestigungsmittels 9, hier ein passfähiges Druckknopfteil, lösbar verbindbar ist.

Das Wegbiegen bzw. Umklappen des Flächenabschnittes 7 erfolgt im Bereich der Biegekante 10, die querschnittgemindert in den flächigen Körper 1 eingebracht ist.

Die beiden Lochungen 4 weisen einen Abstand zueinander von ca. 80 mm auf, was dem Abstand der gebräuchlichen Heftzungen 5 bzw. Heftbügel bei Ordnern für A4-Formate entspricht.

Durch die in diesen Lochungen 4 angeordneten Heftzungen 5 kann der flächenartige Körper 1 eine Hefterfunktion übernehmen.

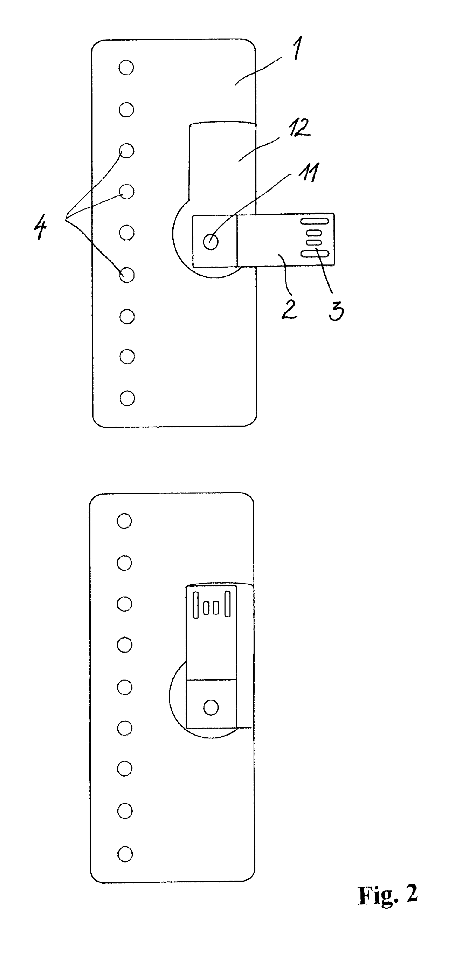

Bei der Ausführung in **Fig. 2** ist der USB-Stick 2 über ein Drehgelenk 11 mit dem flächigen Körper 1 verbunden, so dass er über den Randbereich des flächigen Körpers 1 mit dem Anschlussstecker 3 herausschwenkbar ist.

Weiter wird gezeigt, dass der flächige Körper 1 eine wannenförmige Prägung 12 aufweist, die den nichtherausgeschwenkten USB-Stick 2 aufnimmt.

Der flächige Körper 1 kann auch einen seitlich offenen Hohlraum aufweisen, der den nichtherausgeschwenkten USB-Stick (2) aufnimmt.

Bei der dargestellten Ausführung sind die Lochungen 4 im Randbereich des flächigen Körpers 1 als Lochleiste ausgebildet, wobei mindestens zwei Lochungen 4 einen Abstand von ca. 80 mm aufweisen. Der flächige Körper ist so in den herkömmlichen Ordnern für A4-Formate abheftbar und auch in anders bemessenen Ordnern.

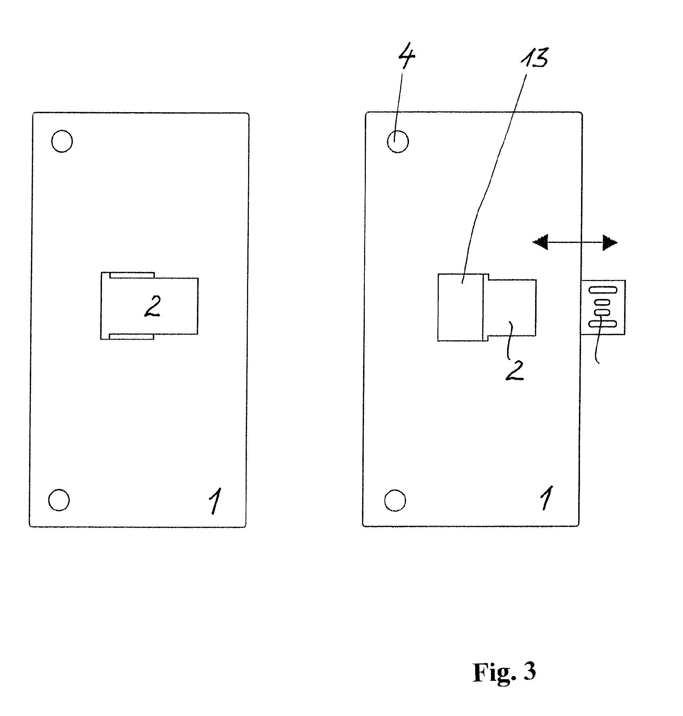

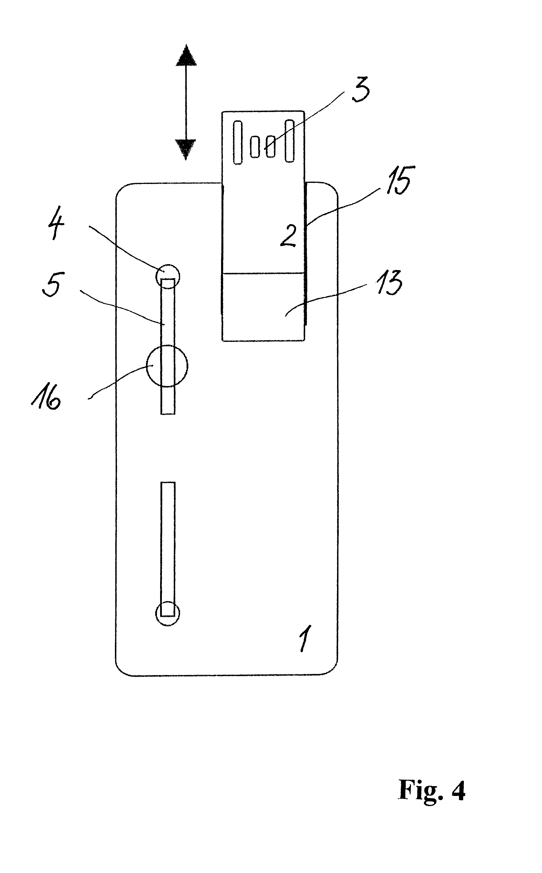

**Fig. 3** und **Fig. 4** zeigen einen flächigen Körper 1, der im Randbereich eine Aussparung 13 aufweist, wobei gegenüberliegende Seiten der Aussparung 13 als Führung 14 für einen gegenüber dem flächigen Körper 1 verschiebbaren USB-Stick 2 ausgebildet sind.
Durch eine Relativbewegung zwischen dem USB-Stick 2 und dem flächigen Körper 1 ist der Anschlussstecker 3 des USB-Sticks 2 so in eine in eine Anschlussdose einsteckbare Position bringbar.

Anstelle einer Aussparung 13 ist es auch möglich, eine wannenförmige, einseitige offene Prägung 12 in den flächigen Körper 1 einzubringen, wobei gegenüberliegende Seiten der wannenförmigen Prägung 12 als Führung 14 für den USB-Stick 2 nutzbar sind.

Ebenso ist es vorgesehen, dass mindestens Teile der wannenförmigen, einseitig offenen Prägung oder Vertiefung 12 oder der Aussparung 13 tunnelartig ausgebildet sind wie in Fig. 3 dargestellt.

Weiter wird in Fig. 4 gezeigt, dass der flächige Körper 1 im gelochten Randbereich eine Vertiefung 15 aufweist zur Aufnahme eines Verschlusssiegels oder eine Plombe, die die Heftzunge 5 überdecken.

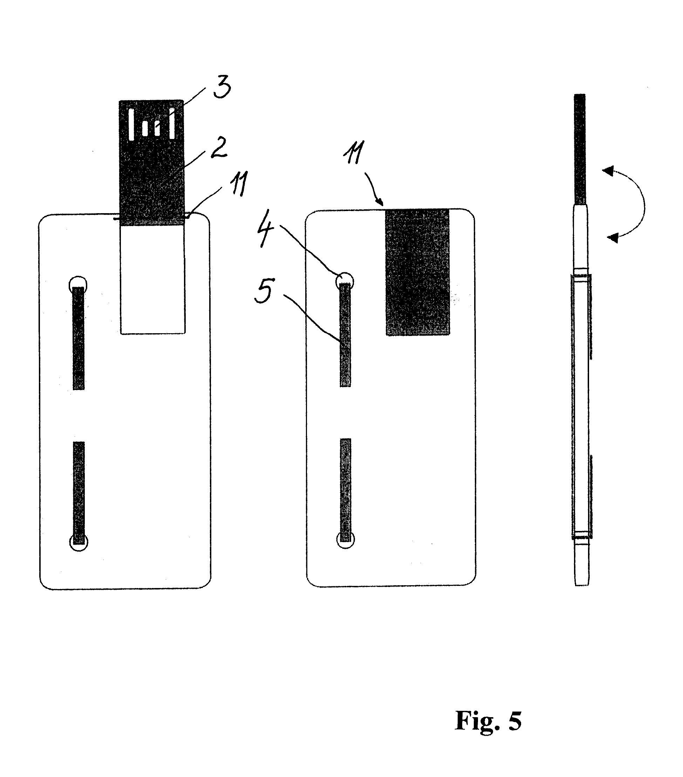

**Fig. 5** zeigt eine Ausführung, bei der anstelle des Herausschwenkens wie in Fig. 2, mittels eines Kippgelenkes 11 der USB-Stick 2 aus dem flächigen Körper 1 herausklappbar ist. Das Herausklappen kann um etwa 180° oder auch nur um etwa 90° erfolgen. In jedem Fall ist der Anschlusstecker frei und kann in eine Anschlussdose eingesteckt werden.

### Bezugszeichenliste

| | |
|---|---|
| 1 | flächiger Körper |
| 2 | USB-Stick |
| 3 | Anschlussstecker des USB-Sticks |
| 4 | Lochungen des flächigen Körpers |
| 5 | Heftzunge |
| 6 | Schlitze im flächigen Körper |
| 7 | wegbiegbare Flächenabschnitte |
| 8 | Befestigungsmittel |
| 9 | Befestigungsmittel |
| 10 | querschnittgeminderte Biegekante |
| 11 | Dreh/Kippgelenk |
| 12 | wannenförmige Prägung zur Aufnahme des USB-Sticks |
| 13 | Aussparung |
| 15 | Führung |
| 16 | Vertiefung zur Aufnahme eines Verschlusssiegels |

## Patentansprüche

1. Elektronische Speichereinrichtung mit einem USB-Stick (2), der in einem flächigen Körper (1) oder auf oder an einem flächigen Körper (1) angeordnet ist, wobei durch eine Relativbewegung zwischen dem USB-Stick (2) und dem flächigen Körper (1) der Anschlussstecker (3) des USB-Sticks (2) in eine in eine Anschlussdose einsteckbare Position bringbar ist und der flächige Körper (1) Lochungen (4) aufweist, die so beabstandet sind, dass der flächige Körper (1) mit mindestens zwei Lochungen (4) mit in Ordnern befindlichen Heftzungen (5) oder Heftbügeln verbindbar ist

2. Elektronische Speichereinrichtung nach Anspruch 1, **dadurch gekennzeichnet, dass**
der flächige Körper (1) über beabstandete Heftzungen (5) verfügt, so dass auf oder unter dem flächigen Körper (1) gelochte Dokumente heftbar sind.

3. Elektronische Speichereinrichtung mit einem USB-Stick (2), der in einem flächigen Körper (1) oder auf oder an einem flächigen Körper (1) angeordnet ist, wobei durch eine Relativbewegung zwischen dem USB-Stick (2) und dem flächigen Körper (1) der Anschlussstecker (3) des USB-Sticks (2) in eine in eine Anschlussdose einsteckbare Position bringbar ist und der flächige Körper (1) über Heftzungen (5) verfügt, so dass auf oder unter dem flächigen Körper (1) gelochte Dokumente heftbar sind.

4. Elektronische Speichereinrichtung nach Anspruch 3, **dadurch gekennzeichnet, dass**
die Heftzungen (5) des flächigen Körpers (1) in Lochungen (4) angeordnet sind.

5. Elektronische Speichereinrichtung nach einem der Ansprüche 1 bis 4, **dadurch gekennzeichnet, dass**
der flächige Körper (1) starr oder elastisch ausgebildet ist.

6. Elektronische Speichereinrichtung nach einem der Ansprüche 1 bis 5, **dadurch gekennzeichnet, dass**
die Lochungen (4) im Randbereich des flächigen Körpers (1) angeordnet sind.

7. Elektronische Speichereinrichtung nach einem der Ansprüche 1 bis 6, **dadurch gekennzeichnet, dass**
der USB-Stick (2) in einem Rand- oder Eckbereich des flächigen Körpers (1) angeordnet ist und der flächige Körper (1) Schlitze (6) aufweist, so dass den Anschlussstecker (3) des USB-Sticks (2) begrenzende Flächenabschnitte (7) wegbiegbar oder umklappbar sind und der Anschlussstecker (3) zur Herstellung einer Steckerverbindung freiliegt, wobei die wegbiegbaren oder umklappbaren Flächenabschnitte (7) über ein Befestigungsmittel (8) verfügen, mit dem sie im weggebogenen oder umgeklappten Zustand mit dem verbliebenen flächigen Körper (1) lösbar verbindbar sind.

8. Elektronische Speichereinrichtung nach Anspruch 7, **dadurch gekennzeichnet, dass**
als Befestigungsmittel (8) Druckknöpfe oder Klettverschlüsse vorgesehen sind, die mit einem auf dem flächigen Körper (1) angeordneten passfähigen Befestigungsmittel (9) verbindbar sind.

9. Elektronische Speichereinrichtung nach Anspruch 7 oder 8, **dadurch gekennzeichnet, dass**
das Wegbiegen von Flächenabschnitten (7) im Bereich von Biegekanten (10) erfolgt, die querschnittgemindert in den flächigen Körper (1) eingebracht sind oder die als Scharnier ausgebildet sind.

10. Elektronische Speichereinrichtung nach einem der Ansprüche 1 bis 6, **dadurch gekennzeichnet, dass**
der USB-Stick (2) über ein Dreh- und/oder Kippgelenk (11) mit dem flächigen Körper (1) verbunden ist, so dass er über den Randbereich des flächigen Körpers (1) mit dem Anschlussstecker (3) herausschwenkbar ist oder der USB-Stick (2) in eine Winkelposition gegenüber der Ebene des flächigen Köpers (1) aufrichtbar ist oder der USB-Stick (2) aus dem flächigen Körper (1) herausklappbar ist.

11. Elektrische Speichereinrichtung nach Anspruch 10, **dadurch gekennzeichnet, dass**
der flächige Körper (1) eine wannenförmige Prägung oder Vertiefung (12) aufweist, die den nichtherausgeschwenkten oder nichtaufgerichteten oder nichtherausgeklappten USB-Stick (2) aufnimmt.

12. Elektrische Speichereinrichtung nach Anspruch 10, **dadurch gekennzeichnet, dass**
der flächige Körper (1) einen seitlich offenen Hohlraum aufweist, der den nichtherausgeschwenkten USB-Stick (2) aufnimmt.

13. Elektrische Speichereinrichtung nach einem der Ansprüche 1 bis 6, **dadurch gekennzeichnet, dass**
der flächige Körper (1) im Randbereich eine Aussparung (13) aufweist oder eine wannenförmige, einseitig offene Prägung oder Vertiefung (12), wobei gegenüberliegende Seiten der Aussparung (13) oder der wannenförmigen Prägung oder Vertiefung (12) als Führung (14) für einen gegenüber dem flächigen Körper (1) verschiebbaren USB-Stick (2) ausgebildet sind.

14. Elektrische Speichereinrichtung nach Anspruch 13, **dadurch gekennzeichnet, dass**
mindestens Teile der wannenförmigen, einseitig offenen Prägung oder Vertiefung (12) oder der Aussparung (13) tunnelartig ausgebildet sind.

15. Elektronische Speichereinrichtung nach einem der Ansprüche 10 bis 14, **dadurch gekennzeichnet, dass**
der eingeschobene, eingedrehte, eingeklappte oder eingekippte USB-Stick (2) in dieser Position zusätzlich durch eine Raste fixiert ist.

16. Elektrische Speichereinrichtung nach einem der Ansprüche 1 oder 2 oder 4 bis 14, **dadurch gekennzeichnet, dass**
die Lochungen (4) des flächigen Körpers (1) als Lochleiste ausgebildet sind, wobei mindestens zwei Lochungen (4) einen Abstand von ca. 80 mm aufweisen.

17. Elektrische Speichereinrichtung nach einem der Ansprüche 2 bis 15, **dadurch gekennzeichnet, dass**
der flächige Körper (1) eine Vertiefung (15) aufweist zur Aufnahme eines Verschlusssiegels oder eine Plombe, die Heftzungen (5) überdecken.
